(19) Europäisches Patentamt
European Patent Office
Office européen des brevets

(11) **EP 3 187 049 B1**

(12) **EUROPEAN PATENT SPECIFICATION**

(45) Date of publication and mention
of the grant of the patent:
**07.08.2019 Bulletin 2019/32**

(51) Int Cl.:
*A01P 13/00* (2006.01)     *A01N 43/18* (2006.01)
*A01N 47/36* (2006.01)     *A01N 43/90* (2006.01)
*A01N 43/54* (2006.01)     *A01N 37/22* (2006.01)
*A01N 43/80* (2006.01)     *A01N 43/42* (2006.01)
*A01N 43/40* (2006.01)     *A01N 39/02* (2006.01)
*A01N 43/60* (2006.01)

(21) Application number: **16204918.3**

(22) Date of filing: **06.10.2014**

(54) **HERBICIDAL COMPOSITION COMPRISING THE ACC INHIBITOR CYCLOXYDIM**

**HERBIZIDZUSAMMENSETZUNG ENTHALTEND DEN ACC-HEMMER CYCLOXYDIM**

**COMPOSITION HERBICIDE COMPRENANT L'INHIBITEUR D'ACC CYCLOXYDIM**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2013 EP 13189088
21.10.2013 US 201361893294 P
19.09.2014 US 201462052494 P**

(43) Date of publication of application:
**05.07.2017 Bulletin 2017/27**

(62) Document number(s) of the earlier application(s) in accordance with Art. 76 EPC:
**14781171.5 / 3 057 433**

(73) Proprietor: **BASF SE
67056 Ludwigshafen am Rhein (DE)**

(72) Inventor: **MORE, Dwight
238004 Singapore (SG)**

(74) Representative: **BASF IP Association
BASF SE
G-FLP-C006
67056 Ludwigshafen (DE)**

(56) References cited:
**EP-A1- 1 382 247          EP-A2- 0 614 608
WO-A1-00/03597          WO-A1-99/65314
WO-A1-2008/116730     WO-A2-2009/115434
DD-A5- 298 731**

• **FARZIN ABDOLLAHI ET AL: "Effect of Separate and Combined Applications of Herbicides on Weed Control and Yield of Sugar Beet", WEED TECHNOLOGY, vol. 18, no. 04, 1 December 2004 (2004-12-01), pages 968-976, XP055357382, US ISSN: 0890-037X, DOI: 10.1614/WT-03-142R2**

**Description**

The present invention relates to herbicidal compositions comprising at least one herbicidal compound A selected from ACC inhibitors, at least one further herbicidal compound B and optionally safener C.

In the case of crop protection compositions, it is desirable, in principle, to increase the specific activity of an active compound and the reliability of the effect. It is particularly desirable for the crop protection composition to control the harmful plants effectively, but at the same time to be compatible with the useful plants in question. Also desirable is a broad spectrum of activity allowing the simultaneous control of harmful plants. Frequently, this cannot be achieved using a single herbicidally active compound.

With many highly effective herbicides, there is the problem that their compatibility with useful plants, in particular dicotyledonous crop plants, such as cotton, oilseed rape and graminaceous plants, such as barley, millet, corn, rice, wheat and sugar cane, is not always satisfactory, i.e. in addition to harmful plants, the crop plants, too, are damaged on a scale which cannot be tolerated. By reducing the application rates, the useful plants are spared; however, naturally, the extent of the control of harmful plants decreases, too.

Frequently, it is a problem that herbicides can only be applied within a narrow time frame in order to achieve the desired herbicidal action, which time frame may be unpredictably influenced by weather conditions.

It is known that special combinations of different specifically active herbicides result in enhanced activity of an herbicide component in the sense of a synergistic effect. In this manner, it is possible to reduce the application rates of herbicidally active compounds required for controlling the harmful plants.

Furthermore, it is known that in some cases joint application of specifically acting herbicides with organic active compounds, some of which may also have herbicidal activity, allows better crop plant compatibility to be achieved. In these cases, the active compounds act as antidotes or antagonists and are also referred to as safeners, since they reduce or even prevent damage to the crop plants.

ACC inhibitors are herbicides whose mechanism of action is based on inhibiting acetyl-CoA-carboxylase (ACC). Examples of ACC inhibitors include, but not limited to, aryloxyphenoxypropionates (FOPs), cyclohexanedione oximes (DIMs) and phenylpyrazolines (DENs).

Some compositions comprising at least one ACC inhibitor and at least one further herbicidally active compound are described, for example, in EP 1 605 760, EP 2 052 605, US 6,908,883 and WO2004/080171. Compositions comprising cyclocydim and at least one further herbicidally active compound are described, for example, in DD 298 731, EP 0 614 608, WO 99/65314, WO 00/03597, EP 1 382 247, WO 2008/116730, WO 2009/115434 and Farzin Abdollahi et al: "Effect of Separate and Combined Applications of Herbicides on Weed Control and Yield of Sugar Beet", Weed Technology, vol. 18, no. 04, pp 968-976.

Nevertheless, there is still room for improvement, for example as regards the activity, spectrum of activity, application rates and compatibility with useful plants.

It is an object of the present invention to provide herbicidal compositions comprising at least one ACC inhibitor which are highly active against unwanted harmful plants. At the same time, the compositions should have good compatibility with useful plants. In addition, the compositions according to the invention should have a broad spectrum of activity. A further object of the present invention is reducing the application rates of active ingredients.

This and further objects are achieved by the herbicidal compositions below.

Accordingly, in one aspect of the invention there is provided a herbicidal composition comprising:

A) a herbicidal compound A from the class of ACC inhibitors which is cycloxydim (a1.19), including agriculturally acceptable salts thereof;
and

B) at least one herbicidal compound B selected from penoxsulam (b2.12) and bispyribac (b2.13);
including agriculturally acceptable salts, ester, thioster and/or amide thereof;
or a herbicidal composition, comprising cycloxydim (a1.19) and one further herbicidal compound B as the only active ingredients, wherein the herbicidal compound B is selected from azimsulfuron (b2.1) and bensulfuron (b2.2) including agriculturally acceptable salts, ester, thioster and/or amide thereof.

Surprisingly, the compositions according to the invention comprising at least one herbicidal compound A and at least one herbicidal compound B have better herbicidal activity, i.e. better activity against harmful plants, than would have been expected based on the herbicidal activity observed for the individual compounds, or a broader activity spectrum. The herbicidal activity to be expected for mixtures based on the individual compound can be calculated using Colby's formula (see below). If the activity observed exceeds the expected additive activity of the individual compounds, synergism is said to be present.

Moreover, the time frame, within which the desired herbicidal action can be achieved, may be expanded by the compositions according to the invention comprising at least one herbicidal compound A and at least one herbicidal compound B and at least one safener C. This allows a more flexibly timed application of the compositions according to the invention in comparison with the single compounds.

Safeners are chemical compounds which prevent or reduce damage on useful plants without having a major impact on the herbicidal action of the herbicidal active components towards unwanted plants. Safeners can be applied before sowings (e.g. seed treatments), on shoots or seedlings as well as in the pre-emergence or post-emergence treatment of useful plants and their habitat.

Surprisingly, the compositions according to the invention comprising at least one herbicidal compound A, at least one herbicidal compound B and at least one safener C have better herbicidal activity, i.e. better activity against harmful plants, than would have been expected based on the herbicidal activity observed for the individual compounds, or a broader activity spectrum, and show better compatibility with useful plants than compositions comprising only at least one herbicidal compound A and at least one herbicidal compound B.

Therefore, in one embodiment of the present invention the compositions comprise at least one herbicidal compound A, at least one herbicidal compound B and at least one safener C.

Examples of safeners C are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

The safeners C, the herbicidal compound A and the herbicidal compounds B can be applied simultaneously or in succession.

The herbicidal compound A, herbicidal compounds B and safeners C are known herbicides and safeners, see, for example, The Pesticide Manual, British Crop Protection Council, 16th edition, 2012; The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660.

If the herbicidal compound A, the herbicidal compounds B and/or the safeners C as described herein are capable of forming geometrical isomers, for example E/Z isomers, it is possible to use both, the pure isomers and mixtures thereof, in the compositions according to the invention.

If the herbicidal compound A, the herbicidal compounds B and/or the safeners C as described herein have one or more centers of chirality and, as a consequence, are present as enantiomers or diastereomers, it is possible to use both, the pure enantiomers and diastereomers and their mixtures, in the compositions according to the invention.

If the herbicidal compound A, the herbicidal compounds B and/or the safeners C as described herein have ionizable functional groups, they can also be employed in the form of their agriculturally acceptable salts. The term "agriculturally acceptable salts" is used herein to mean in general, the salts of those cations and the acid addition salts of those acids whose cations and anions, respectively, have no adverse effect on the herbicidal activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, heptylammonium, dodecylammonium, tetradecylammonium, tetramethylammonium, tetraethylammonium, tetrabutylammonium, 2-hydroxyethylammonium (olamine salt), 2-(2-hydroxyeth-1-oxy)eth-1-ylammonium (diglycolamine salt), di(2-hydroxyeth-1-yl)ammonium (diolamine salt), tris(2-hydroxyethyl)ammonium (trolamine salt), tris(2-hydroxypropyl)ammonium, benzyltrimethylammonium, benzyltriethylammonium, N,N,N-trimethylethanolammonium (choline salt), furthermore phosphonium ions, sulfonium ions, preferably tri($C_1$-$C_4$-alkyl)sulfonium, such as trimethylsulfonium, and sulfoxonium ions, preferably tri($C_1$-$C_4$-alkyl)sulfoxonium, and finally the salts of polybasic amines such as N,N-bis-(3-aminopropyl)methylamine and diethylenetriamine.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of $C_1$-$C_4$-alkanoic acids, preferably formate, acetate, propionate and butyrate.

The herbicidal compound A, the herbicidal compounds B and/or the safeners C as described herein having a carboxyl, hydroxy and/or an amino group can be employed in the form of the acid, in the form of an agriculturally suitable salt as mentioned above or else in the form of an agriculturally acceptable derivative, for example as amides, such as mono- and di-$C_1$-$C_6$-alkylamides or arylamides, as esters, for example as allyl esters, propargyl esters, $C_1$-$C_{10}$-alkyl esters, alkoxyalkyl esters, tefuryl ((tetrahydrofuran-2-yl)methyl) esters and also as thioesters, for example as $C_1$-$C_{10}$-alkylthio esters. Preferred mono- and di-$C_1$-$C_6$-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl), meptyl (1-methylheptyl), heptyl, octyl or isooctyl (2-ethylhexyl) esters. Preferred $C_1$-$C_4$-alkoxy-$C_1$-$C_4$-alkyl esters are the straight-chain or branched $C_1$-$C_4$-alkoxy ethyl esters, for example the 2-methoxyethyl, 2-ethoxyethyl, 2-butoxyethyl (butotyl), 2-butoxypropyl or 3-butoxypropyl ester. An example of a straight-chain or branched $C_1$-$C_{10}$-alkylthio ester is the ethylthio ester.

Further embodiments of the invention are evident from the claims, the description and the examples.

The preferred embodiments of the invention mentioned herein below have to be understood as being preferred either independently from each other or in combination with one another.

According to the invention the compositions comprise a herbicidal compound A from the class of ACC inhibitors. Regarding the mode of action of these compounds see group b0) below.

The herbicidal compound A) is cycloxydim (a1.19) including agriculturally acceptable salts thereof.

According to one embodiment of the invention the compositions comprise a herbicidal compound A and at least one herbicidal compound B as defined in claim 1.

The modes of action of herbicidal compounds described in this application are outlined below.

The herbicidal activity of compounds selected from ACC inhibitors (group b0) is based on affecting lipid biosynthesis through the inhibition of acetylCoA carboxylase and thus on the inhibition of the lipid biosynthesis. The ACC inhibitors belong to the group A of the HRAC classification system.

The herbicidal activity of compounds selected from non-ACC inhibitors of the lipid biosynthesis (group b1) is based on affecting lipid biosynthesis through a mode of action different from the inhibition of acetylCoA carboxylase. The non-ACC inhibitors belong to the group N of the HRAC classification.

The herbicidal activity of compounds selected from ALS inhibitors (group b2) is based on the inhibition of acetolactate synthase and thus on the inhibition of the branched chain amino acid biosynthesis. These inhibitors belong to the group B of the HRAC classification system.

The herbicidal activity of compounds selected from PSII inhibitors of photosynthesis (group b3) is based on the inhibition of the photosystem II in plants. These inhibitors belong to the groups C1, C2 and C3 of HRAC classification.

The herbicidal activity of compounds selected from inhibitors of protoporphyrinogen-IX-oxidase (group b4) is based on the inhibition of the protoporphyrinogen-IX-oxidase. These inhibitors belong to the group E of the HRAC classification system.

The herbicidal activity of compounds selected from bleacher-herbicides (group b5) is based on the inhibition of the carotenoid biosynthesis. These include compounds which inhibit carotenoid biosynthesis by inhibition of 4-hydroxyphenylpyruvate-dioxygenase (HPPD inhibitors, group F2 of HRAC classification) and compounds that inhibit DOXP synthase (group F4 of HRAC classification).

The herbicidal activity of these compounds selected from inhibitors of microtubule assembly (group b6) is based on the disturbance or inhibition of microtubule assembly and thus on the inhibition of mitosis. These inhibitors belong to the group K1 of the HRAC classification system. The auxinic herbicides (group b7) include compounds that mimic auxins, i.e. plant hormones, and affect the growth of the plants. These compounds belong to the group O of the HRAC classification system.

The herbicidal activity of compounds selected from VLCFA inhibitors (herbicides b8) is based on the inhibition of the synthesis of very long chain fatty acids and thus on the disturbance or inhibition of cell division in plants. These inhibitors belong to the group K3 of the HRAC classification system.

As to the given mechanisms of action and classification of the active substances, see e.g. "HRAC, Classification of Herbicides According to Mode of Action", http://www.plantprotection.org/hrac/MOA.html). The assignment of the compounds to the respective modes of action is based on current knowledge. If several modes of action apply to one active compound, this substance was only assigned to one mechanism of action.

The herbicidal compound A and the herbicidal compounds B mentioned above having a carboxyl, hydroxy and/or an amino group can be employed in the form of the acid, in the form of an agriculturally suitable salt as mentioned above or else in the form of an agriculturally acceptable derivative such as ester, thioster and/or amide in the compositions according to the invention.

Possible examples (not necessarily according to the present invention) of the herbicidal compounds B as well as agriculturally acceptable salts and derivatives thereof which can be used in combination with the herbicidal compound A are:

b0) from the group of lipid biosynthesis inhibitors:

ACC-herbicides:

aryloxyphenoxypropionates (FOPs): clodinafop, clodinafop-propargyl, cyhalofop, cyhalofop-butyl, diclofop, diclofop-methyl, fenoxaprop, fenoxaprop-ethyl, fenoxaprop-P, fenoxaprop-P-ethyl, fluazifop, fluazifop-butyl, fluazifop-P, fluazifop-P-butyl, haloxyfop, haloxyfop-methyl, haloxyfop-P, haloxyfop-P-methyl, metamifop, propaquizafop, quizalofop, quizalofop-ethyl, quizalofop-tefuryl, quizalofop-P, quizalofop-P-ethyl and quizalofop-P-tefuryl,

cyclohexanedione oximes (DIMs): alloxydim, alloxydim-sodium, butroxydim, clethodim, cycloxydim, profoxydim, sethoxydim, tepraloxydim and tralkoxydim, and

phenylpyrazolines (DEN): pinoxaden,

b1) from non ACC herbicides: thiobencarb;

b2) from the group of the ALS inhibitors:

sulfonylureas: azimsulfuron, bensulfuron, bensulfuron-methyl, cyclosulfamuron, halosulfuron, halosulfuron-methyl, imazosulfuron, metsulfuron, metsulfuron-methyl, orthosulfamuron, pyrazosulfuron, pyrazosulfuron-ethyl, thifensulfuron and thifensulfuron-methyl,

imidazolinones: imazamox and imazethapyr,

triazolopyrimidines: penoxsulam,

pyrimidinylbenzoates: bispyribac and bispyribac-sodium;

b3) from the group of the PS II photosynthesis inhibitors:

benzothiadiazinone: bentazon and bentazon-sodium; and

amides: propanil;

b4) from the group of the protoporphyrinogen-IX oxidase inhibitors:

diphenyl ethers: acifluorfen and acifluorfen-sodium;

triazolinones: carfentrazone and carfentrazone-ethyl; and

pyrimidinediones: saflufenacil;

b5) from the group of the bleacher-herbicides: clomazone and topramezone;

b6) from the group of the inhibitors of microtubule assembly: pendimethalin;

b7) from the group of the auxinic herbicides:

phenoxy-carboxylic acids: 2,4-D and its salts and esters such as clacyfos, MCPA and its salts and esters, MCPA-thioethyl,

benzoic acids: dicamba and its salts and esters,

pyridine-carboxylic acidsfluroxypyr, fluroxypyr-butometyl, fluroxypyr-meptyl and triclopyr and its salts and esters; quinolinecarboxylic acids: quinclorac;

b8) from the group of VLCFA inhibitors: pretilachlor.

In the case of topramezone (b5.2) suitable salts include topramezone-sodium.

In the case of imazamox (b2.10) suitable salts include imazamox-ammonium.

In the case of imazethapyr (b2.11) suitable salts include imazethapyr-ammonium and imazethapyr-isopropylammonium.

In the case of of 2,4-D (b7.1) suitable salts include 2,4-D-ammonium, 2,4-D-dimethylammonium, 2,4-D-diethylammonium, 2,4-D-diethanolammonium (2,4-D-diolamine), 2,4-D-triethanolammonium, 2,4-D-isopropylammonium, 2,4-D-triisopropanolammonium, 2,4-D-heptylammonium, 2,4-D-dodecylammonium, 2,4-D-tetradecylammonium, 2,4-D-triethylammonium, 2,4-D-tris(2-hydroxypropyl)ammonium, 2,4-D-tris(isopropyl)ammonium, 2,4-D-trolamine, 2,4-D-lithium, 2,4-D-sodium. Examples of suitable esters of 2,4-D are 2,4-D-butotyl, 2,4-D-2-butoxypropyl, 2,4-D-3-butoxypropyl, 2,4-D-butyl, 2,4-D-ethyl, 2,4-D-ethylhexyl, 2,4-D-isobutyl, 2,4-D-isooctyl, 2,4-D-isopropyl, 2,4-D-meptyl, 2,4-D-methyl, 2,4-D-octyl, 2,4-D-pentyl, 2,4-D-propyl, 2,4-D-tefuryl and clacyfos.

In the case of dicamba (b7.2) suitable salts include those, where the counterion is an agriculturally acceptable cation. For example, suitable salts of dicamba are dicamba-sodium, dicamba-potassium, dicamba-methylammonium, dicamba-dimethylammonium, dicamba-isopropylammonium, dicamba-diglycolamine, dicamba-olamine, dicamba-diolamine, dicamba-trolamine, dicamba-N,N-bis-(3-aminopropyl)methylamine and dicamba-diethylenetriamine.

In the case of dicamba (b7.2) suitable esters include dicamba-methyl and dicamba-butotyl.

In the case of fluroxypyr (b7.3) suitable esters include are fluroxypyr-meptyl and fluroxypyr-2-butoxy-1-methylethyl, wherein fluroxypyr-meptyl is preferred.

In the case of MCPA (b7.4) suitable salts and esters include MCPA-butotyl, MCPA-butyl, MCPA-dimethylammonium, MCPA-diolamine, MCPA-ethyl, MCPA-thioethyl, MCPA-2-ethylhexyl, MCPA-isobutyl, MCPA-isoctyl, MCPA-isopropyl, MCPA-isopropylammonium, MCPA-methyl, MCPA-olamine, MCPA-potassium, MCPA-sodium and MCPA-trolamine.

In the case of quinclorac (b7.5) suitable salts include quinclorac-dimethylammonium.

In the case of triclopyr (b7.6) suitable salts include triclopyr-triethylammonium.

In the case of triclopyr (b7.6) suitable esters include triclopyr-ethyl and triclopyr-butotyl.

According to the present invention, the herbicide B to be used with herbicide A is selected from penoxsulam, bispyribac, azimsulfuron and bensulfuron.

According to a preferred embodiment of the invention, the composition comprises a herbicidal compound A which is cycloxydim (a1.19) and at least one herbicidal compound B selected from penoxsulam (b2.12) and bispyribac (b2.13).

According to another preferred embodiment of the invention, the composition comprises at least two, preferably exactly two, different from each other herbicidal compounds B selected from the groups b0) to b8), wherein at least one of the herbicidal compounds B is selected from penoxsulam (b2.12) and bispyribac (b2.13).

According to another preferred embodiment of the invention, the composition comprises at least three, preferably exactly three different from each other, herbicidal compounds B selected from the groups b0) to b8), wherein at least one of the herbicidal compounds B is selected from penoxsulam (b2.12) and bispyribac (b2.13). Particularly preferred are the following compositions of the invention listed in Table A19:

Table A19

| Composition No. | Component A | Component B |
|---|---|---|
| 19.25 | a1.19 | b2.1 |
| 19.26 | a1.19 | b2.2 |
| 19.36 | a1.19 | b2.12 |
| 19.37 | a1.19 | b2.13 |
| 19.63 | a1.19 | b1.1 + b2.12 |
| 19.64 | a1.19 | b1.1 + b2.13 |
| 19.138 | a1.19 | b2.3 + b2.12 |
| 19.139 | a1.19 | b2.3 + b2.13 |
| 19.161 | a1.19 | b2.4 + b2.12 |
| 19.162 | a1.19 | b2.4 + b2.13 |
| 19.183 | a1.19 | b2.5 + b2.12 |
| 19.184 | a1.19 | b2.5 + b2.13 |
| 19.204 | a1.19 | b2.6 + b2.12 |
| 19.205 | a1.19 | b2.6 + b2.13 |
| 19.224 | a1.19 | b2.7 + b2.12 |
| 19.225 | a1.19 | b2.7 + b2.13 |
| 19.243 | a1.19 | b2.8 + b2.12 |
| 19.244 | a1.19 | b2.8 + b2.13 |
| 19.261 | a1.19 | b2.9 + b2.12 |
| 19.262 | a1.19 | b2.9 + b2.13 |
| 19.278 | a1.19 | b2.10 + b2.12 |

(continued)

| Composition No. | Component A | Component B |
|---|---|---|
| 19.279 | a1.19 | b2.10 + b2.13 |
| 19.294 | a1.19 | b2.11 + b2.12 |
| 19.295 | a1.19 | b2.11 + b2.13 |
| 19.310 | a1.19 | b2.12 + b2.13 |
| 19.311 | a1.19 | b2.12 + b3.1 |
| 19.312 | a1.19 | b2.12 + b3.2 |
| 19.313 | a1.19 | b2.12 + b4.1 |
| 19.314 | a1.19 | b2.12 + b4.2 |
| 19.315 | a1.19 | b2.12 + b4.3 |
| 19.316 | a1.19 | b2.12 + b5.1 |
| 19.317 | a1.19 | b2.12 + b5.2 |
| 19.318 | a1.19 | b2.12 + b6.1 |
| 19.319 | a1.19 | b2.12 + b7.1 |
| 19.320 | a1.19 | b2.12 + b7.2 |
| 19.321 | a1.19 | b2.12 + b7.3 |
| 19.322 | a1.19 | b2.12 + b7.4 |
| 19.323 | a1.19 | b2.12 + b7.5 |
| 19.324 | a1.19 | b2.12 + b7.6 |
| 19.325 | a1.19 | b2.13 + b3.1 |
| 19.326 | a1.19 | b2.13 + b3.2 |
| 19.327 | a1.19 | b2.13 + b4.1 |
| 19.328 | a1.19 | b2.13 + b4.2 |
| 19.329 | a1.19 | b2.13 + b4.3 |
| 19.330 | a1.19 | b2.13 + b5.1 |
| 19.331 | a1.19 | b2.13 + b5.2 |
| 19.332 | a1.19 | b2.13 + b6.1 |
| 19.333 | a1.19 | b2.13 + b7.1 |
| 19.334 | a1.19 | b2.13 + b7.2 |
| 19.335 | a1.19 | b2.13 + b7.3 |
| 19.336 | a1.19 | b2.13 + b7.4 |
| 19.337 | a1.19 | b2.13 + b7.5 |
| 19.338 | a1.19 | b2.13 + b7.6 |
| 19.441 | a1.19 | b1.1 + b2.12 + b3.2 |
| 19.442 | a1.19 | b1.1 + b2.13 + b3.2 |
| 19.513 | a1.19 | b2.3 + b2.12 + b3.2 |
| 19.514 | a1.19 | b2.3 + b2.13 + b3.2 |
| 19.535 | a1.19 | b2.4 + b2.12 + b3.2 |
| 19.536 | a1.19 | b2.4 + b2.13 + b3.2 |

(continued)

| Composition No. | Component A | Component B |
|---|---|---|
| 19.556 | a1.19 | b2.5 + b2.12 + b3.2 |
| 19.557 | a1.19 | b2.5 + b2.13 + b3.2 |
| 19.576 | a1.19 | b2.6 + b2.12 + b3.2 |
| 19.577 | a1.19 | b2.6 + b2.13 + b3.2 |
| 19.594 | a1.19 | b2.7 + b2.12 + b3.2 |
| 19.595 | a1.19 | b2.7 + b2.13 + b3.2 |
| 19.612 | a1.19 | b2.8 + b2.12 + b3.2 |
| 19.613 | a1.19 | b2.8 + b2.13 + b3.2 |
| 19.629 | a1.19 | b2.9 + b2.12 + b3.2 |
| 19.630 | a1.19 | b2.9 + b2.13 + b3.2 |
| 19.645 | a1.19 | b2.10 + b2.12 + b3.2 |
| 19.646 | a1.19 | b2.10 + b2.13 + b3.2 |
| 19.660 | a1.19 | b2.11 + b2.12 + b3.2 |
| 19.661 | a1.19 | b2.11 + b2.13 + b3.2 |
| 19.675 | a1.19 | b2.12 + b2.13 + b3.2 |
| 19.676 | a1.19 | b2.12 + b3.1 + b3.2 |
| 19.677 | a1.19 | b2.12 + b4.1 + b3.2 |
| 19.678 | a1.19 | b2.12 + b4.2 + b3.2 |
| 19.679 | a1.19 | b2.12 + b4.3 + b3.2 |
| 19.680 | a1.19 | b2.12 + b5.1 + b3.2 |
| 19.681 | a1.19 | b2.12 + b5.2 + b3.2 |
| 19.682 | a1.19 | b2.12 + b6.1 + b3.2 |
| 19.683 | a1.19 | b2.12 + b7.1 + b3.2 |
| 19.684 | a1.19 | b2.12 + b7.2 + b3.2 |
| 19.685 | a1.19 | b2.12 + b7.3 + b3.2 |
| 19.686 | a1.19 | b2.12 + b7.4 + b3.2 |
| 19.687 | a1.19 | b2.12 + b7.5 + b3.2 |
| 19.688 | a1.19 | b2.12 + b7.6 + b3.2 |
| 19.689 | a1.19 | b2.13 + b3.1 + b3.2 |
| 19.690 | a1.19 | b2.13 + b4.1 + b3.2 |
| 19.691 | a1.19 | b2.13 + b4.2 + b3.2 |
| 19.692 | a1.19 | b2.13 + b4.3 + b3.2 |
| 19.693 | a1.19 | b2.13 + b5.1 + b3.2 |
| 19.694 | a1.19 | b2.13 + b5.2 + b3.2 |
| 19.695 | a1.19 | b2.13 + b6.1 + b3.2 |
| 19.696 | a1.19 | b2.13 + b7.1 + b3.2 |
| 19.697 | a1.19 | b2.13 + b7.2 + b3.2 |
| 19.698 | a1.19 | b2.13 + b7.3 + b3.2 |

(continued)

| Composition No. | Component A | Component B |
|---|---|---|
| 19.699 | a1.19 | b2.13 + b7.4 + b3.2 |
| 19.700 | a1.19 | b2.13 + b7.5 + b3.2 |
| 19.701 | a1.19 | b2.13 + b7.6 + b3.2 |
| 19.789 | a1.19 | b1.1 + b2.12 + b4.3 |
| 19.790 | a1.19 | b1.1 + b2.13 + b4.3 |
| 19.858 | a1.19 | b2.3 + b2.12 + b4.3 |
| 19.859 | a1.19 | b2.3 + b2.13 + b4.3 |
| 19.879 | a1.19 | b2.4 + b2.12 + b4.3 |
| 19.880 | a1.19 | b2.4 + b2.13 + b4.3 |
| 19.899 | a1.19 | b2.5 + b2.12 + b4.3 |
| 19.900 | a1.19 | b2.5 + b2.13 + b4.3 |
| 19.918 | a1.19 | b2.6 + b2.12 + b4.3 |
| 19.919 | a1.19 | b2.6 + b2.13 + b4.3 |
| 19.935 | a1.19 | b2.7 + b2.12 + b4.3 |
| 19.936 | a1.19 | b2.7 + b2.13 + b4.3 |
| 19.952 | a1.19 | b2.8 + b2.12 + b4.3 |
| 19.953 | a1.19 | b2.8 + b2.13 + b4.3 |
| 19.968 | a1.19 | b2.9 + b2.12 + b4.3 |
| 19.969 | a1.19 | b2.9 + b2.13 + b4.3 |
| 19.983 | a1.19 | b2.10 + b2.12 + b4.3 |
| 19.984 | a1.19 | b2.10 + b2.13 + b4.3 |
| 19.997 | a1.19 | b2.11 + b2.12 + b4.3 |
| 19.998 | a1.19 | b2.11 + b2.13 + b4.3 |
| 19.1011 | a1.19 | b2.12 + b2.13 + b4.3 |
| 19.1012 | a1.19 | b2.12 + b3.1 + b4.3 |
| 19.1013 | a1.19 | b2.12 + b4.1 + b4.3 |
| 19.1014 | a1.19 | b2.12 + b4.2 + b4.3 |
| 19.1015 | a1.19 | b2.12 + b5.1 + b4.3 |
| 19.1016 | a1.19 | b2.12 + b5.2 + b4.3 |
| 19.1017 | a1.19 | b2.12 + b6.1 + b4.3 |
| 19.1018 | a1.19 | b2.12 + b7.1 + b4.3 |
| 19.1019 | a1.19 | b2.12 + b7.2 + b4.3 |
| 19.1020 | a1.19 | b2.12 + b7.3 + b4.3 |
| 19.1021 | a1.19 | b2.12 + b7.4 + b4.3 |
| 19.1022 | a1.19 | b2.12 + b7.5 + b4.3 |
| 19.1023 | a1.19 | b2.12 + b7.6 + b4.3 |
| 19.1024 | a1.19 | b2.13 + b3.1 + b4.3 |
| 19.1025 | a1.19 | b2.13 + b4.1 + b4.3 |

(continued)

| Composition No. | Component A | Component B |
|---|---|---|
| 19.1026 | a1.19 | b2.13 + b4.2 + b4.3 |
| 19.1027 | a1.19 | b2.13 + b5.1 + b4.3 |
| 19.1028 | a1.19 | b2.13 + b5.2 + b4.3 |
| 19.1029 | a1.19 | b2.13 + b6.1 + b4.3 |
| 19.1030 | a1.19 | b2.13 + b7.1 + b4.3 |
| 19.1031 | a1.19 | b2.13 + b7.2 + b4.3 |
| 19.1032 | a1.19 | b2.13 + b7.3 + b4.3 |
| 19.1033 | a1.19 | b2.13 + b7.4 + b4.3 |
| 19.1034 | a1.19 | b2.13 + b7.5 + b4.3 |
| 19.1035 | a1.19 | b2.13 + b7.6 + b4.3 |
| 19.1126 | a1.19 | b8.1 + b2.12 |
| 19.1127 | a1.19 | b8.1 + b2.13 |
| 19.1177 | a1.19 | a1.20 + b2.12 |
| 19.1178 | a1.19 | a1.20 + b2.13 |

Among two way compositions most preferred are the following ones:

a1.19 + b2.1,   a1.19 + b2.2,   a1.19 + b2.12,   a1.19 + b2.13,

Among three way compositions most preferred are the following ones:

a1.19 + b2.12 + b2.4,   a1.19 + b2.12 + b3.1,   a1.19 + b2.12 + b3.2,
a1.19 + b2.12 + b4.3,   a1.19 + b2.12 + b7.5,

Particularly preferred are the following three way compositions:

a1.19 + a1.20 + b2.12,   a1.19 + a1.20 + b2.13,
a1.19 + b2.3 + b2.12,   a1.19 + b2.3 + b2.13,
a1.19 + b2.5 + b2.12,   a1.19 + b2.5 + b2.13,
a1.19 + b2.7 + b2.12,   a1.19 + b2.7 + b2.13,
a1.19 + b2.8 + b2.12,   a1.19 + b2.8 + b2.13,
a1.19 + b2.12 + b2.13,   a1.19 + b2.12 + b3.2,   a1.19 + b2.12 + b4.3,
a1.19 + b2.12 + b5.1,   a1.19 + b2.12 + b7.1,   a1.19 + b2.12 + b7.5,
a1.19 + b2.12 + b7.6,   a1.19 + b2.12 + b8.1,   a1.19 + b2.13 + b3.2,
a1.19 + b2.13 + b5.1,   a1.19 + b2.13 + b7.1,
a1.19 + b2.13 + b7.5,   a1.19 + b2.13 + b7.6,   a1.19 + b2.13 + b8.1,

Among four way compositions most preferred are the following ones:

a1.19 + b1.1 + b3.2 + b2.12,
a1.19 + b2.4 + b4.3 + b2.12,
a1.19 + b4.3 + b7.5 + b2.12,

According to another preferred embodiment of the invention, the composition comprises at least one, preferably exactly one safener C.
According to another preferred embodiment of the invention, the composition comprises a herbicidal compound A, at least one, preferably exactly one, herbicidal compound B, and at least one, preferably exactly one safener C.

According to another preferred embodiment of the invention, the composition comprises a herbicidal compound A, at least two, preferably exactly two herbicidal compounds B different from each other, and at least one, preferably exactly one, safener C.

According to another preferred embodiment of the invention, the composition comprises a herbicidal compound A, at least three, preferably exactly three herbicidal compounds B different from each other, and at least one, preferably exactly one, safener C.

Especially preferred safeners C are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Particularly preferred safeners C are benoxacor, cloquintocet, cyprosulfamide, dichlormid, fenchlorazole, fenclorim, furilazole, isoxadifen, mefenpyr, naphtalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and N-(2-Methoxybenzoyl)-4-[(methylaminocarbonyl)amino]benzenesulfonamide (CAS 129531-12-0).

Here and below, the term "binary compositions" includes compositions comprising one or more, for example 1, 2 or 3, herbicidal compounds A and either one or more, for example 1, 2 or 3, herbicidal compounds B. Correspondingly, the term "ternary compositions" includes compositions comprising one or more, for example 1, 2 or 3, herbicidal compounds A, one or more, for example 1, 2 or 3, herbicidal compounds B and one or more, for example 1, 2 or 3, safeners C.

In binary compositions comprising a herbicidal compound A and at least one herbicidal compound B, the weight ratio of the compounds A:B is generally in the range of from 1:1000 to 1000:1, preferably in the range of from 1:500 to 500:1, in particular in the range of from 1:250 to 250:1 and particularly preferably in the range of from 1:75 to 75:1.

In ternary compositions comprising a herbicidal compound A, at least one herbicidal compound B and at least one safener C, the relative proportions by weight of the compounds A:B are generally in the range of from 1:1000 to 1000:1, preferably in the range of from 1:500 to 500:1, in particular in the range of from 1:250 to 250:1 and particularly preferably in the range of from 1:75 to 75:1, the weight ratio of the compounds A:C is generally in the range of from 1:1000 to 1000:1, preferably in the range of from 1:500 to 500:1, in particular in the range of from 1:250 to 250:1 and particularly preferably in the range of from 1:75 to 75:1, and the weight ratio of the compounds B:C is generally in the range of from 1:1000 to 1000:1, preferably in the range of from 1:500 to 500:1, in particular in the range of from 1:250 to 250:1 and particularly preferably in the range of from 1:75 to 75:1. The weight ratio of compounds A + B to the compounds C is preferably in the range of from 1:500 to 500:1, in particular in the range of from 1:250 to 250:1 and particularly preferably in the range of from 1:75 to 75:1.

The compositions according to the invention are suitable as herbicides as such or as appropriately formulated agrochemical compositions. As used herein, the term "agrochemical composition" refers to a composition comprising a herbicidally effective amount of the herbicidal composition according to the invention and at least one auxiliary customary for agrochemical compositions.

Accordingly, the invention relates in particular to compositions in the form of herbicidally active agrochemical compositions comprising a herbicidally effective amount of A) at least one herbicidal compound A from the class of ACC inhibitors which is cycloxydim (a1.19) and B) at least one herbicidal compound B selected from penoxsulam (b2.12) and bispyribac (b2.13), or comprising as the only active ingredients a herbicidally effective amount of A) at least one herbicidal compound A from the class of ACC inhibitors which is cycloxydim (a1.19) and one further herbicidal compound B) selected from azimsulfuron (b2.1) and bensulfuron (b2.2) and also at least one liquid and/or solid carrier and/or one or more surfactants and, if desired, one or more further auxiliaries customary for agrochemical compositions.

The invention also relates to compositions in the form of an agrochemical composition, which is a 1-component composition comprising at least one herbicidal compound A, at least one herbicidal compound B, at least one solid or liquid carrier and/or one or more surfactants and, if desired, one or more further auxiliaries customary for agrochemical compositions.

The invention also relates to compositions in the form of an agrochemical composition, which is a 2-component composition comprising a first component comprising at least one herbicidal compound A, a solid or liquid carrier and/or one or more surfactants, and a second component comprising at least one herbicidal compound B, a solid or liquid carrier and/or one or more surfactants, where additionally both components may also comprise further auxiliaries customary for agrochemical compositions.

The term "effective amount" denotes an amount of the active ingredients, which is sufficient for controlling unwanted plants, especially for controlling unwanted plants in cultivated plants and which does not result in a substantial damage to the treated plants. Such an amount can vary in a broad range and is dependent on various factors, such as the plants to be controlled, the treated cultivated plant or material, the climatic conditions and the specific composition according to the invention used.

The at least one herbicidal compound A, at least one herbicidal compound B and ottionally safener C, their N-oxides, salts or derivatives can be converted into customary types of agrochemical compositions, e. g. solutions, emulsions, suspensions, dusts, powders, pastes, granules, pressings, capsules, and mixtures thereof. Examples for agrochemical composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further agrochemical compositions types are defined in the "Catalogue of pesticide formulation types and international coding system", Technical Monograph No. 2, 6th Ed. May 2008, CropLife International.

The agrochemical compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substitued fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for agrochemical composition types and their preparation are:

i) Water-soluble concentrates (SL, LS)

10-60 wt% of a compostion according to the invention and 5-15 wt% wetting agent (e.g. alcohol alkoxylates) are dissolved in water and/or in a water-soluble solvent (e.g. alcohols) ad 100 wt%. The active substance dissolves upon dilution with water.

ii) Dispersible concentrates (DC)

5-25 wt% of a composition according to the invention and 1-10 wt% dispersant (e. g. polyvinylpyrrolidone) are dissolved in organic solvent (e.g. cyclohexanone) ad 100 wt%. Dilution with water gives a dispersion.

iii) Emulsifiable concentrates (EC)

15-70 wt% of a composition according to the invention and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.

iv) Emulsions (EW, EO, ES)

5-40 wt% of a composition according to the invention and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.

v) Suspensions (SC, OD, FS)

In an agitated ball mill, 20-60 wt% of a composition according to the invention are comminuted with addition of 2-10 wt% dispersants and wetting agents (e.g. sodium lignosulfonate and alcohol ethoxylate), 0,1-2 wt% thickener (e.g. xanthan gum) and water ad 100 wt% to give a fine active substance suspension. Dilution with water gives a stable suspension of the active substance. For FS type composition up to 40 wt% binder (e.g. polyvinylalcohol) is added.

vi) Water-dispersible granules and water-soluble granules (WG, SG)

50-80 wt% of a composition according to the invention are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% of a composition according to the invention are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

viii) Gel (GW, GF)

In an agitated ball mill, 5-25 wt% of a acomposition according to the invention are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.

iv) Microemulsion (ME)

5-20 wt% of a composition according to the invention are added to 5-30 wt% organic solvent blend (e.g. fatty acid dimethylamide and cyclohexanone), 10-25 wt% surfactant blend (e.g. alkohol ethoxylate and arylphenol ethoxylate), and water ad 100 %. This mixture is stirred for 1 h to produce spontaneously a thermodynamically stable microemulsion.

iv) Microcapsules (CS)

An oil phase comprising 5-50 wt% of a composition according to the invention, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a compound I according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of a polyurea microcapsules. The monomers amount to 1-10 wt%. The wt% relate to the total CS composition.

ix) Dustable powders (DP, DS)

1-10 wt% of a composition according to the invention are ground finely and mixed intimately with solid carrier (e.g. finely divided kaolin) ad 100 wt%.

x) Granules (GR, FG)

0.5-30 wt% of a composition according to the invention is ground finely and associated with solid carrier (e.g. silicate) ad 100 wt%. Granulation is achieved by extrusion, spray-drying or the fluidized bed.

xi) Ultra-low volume liquids (UL)

1-50 wt% of a composition according to the invention are dissolved in organic solvent (e.g. aromatic hydrocarbon) ad 100 wt%.

The agrochemical compositions types i) to xi) may optionally comprise further auxiliaries, such as 0,1-1 wt% bactericides, 5-15 wt% anti-freezing agents, 0,1-1 wt% anti-foaming agents, and 0,1-1 wt% colorants.

The agrochemical compositions generally comprise between 0.01 and 95%, preferably between 0.1 and 90%, and in particular between 0.5 and 75%, by weight of active substance. The active substances are employed in a purity of from 90% to 100%, preferably from 95% to 100% (according to NMR spectrum).

Furhermore, the invention relates to a process for the preparation of the agrochemical composition, which comprises mixing a herbicidally active amount of at least one herbicidal composition according to the present invention with at least one inert liquid and/or solid carrier and, if desired, at least one surface-active substance.

Furhermore, the invention relates to a process for the preparation of the agrochemical composition, which comprises mixing a herbicidally active amount of at least one herbicidal compound A and at least one herbicidal compound B and optionally a safener C with at least one inert liquid and/or solid carrier and, if appropriate, at least one surface-active substance.

The invention furthermore relates to a method for controlling unwanted vegetation, preferably where crop plants are cultivated, more preferably where graminaceous crop plants, such as barley, millet, corn, rice, wheat and sugar cane, are cultivated, most preferably where rice plants are cultivated.

The invention furthermore relates to a method for controlling unwanted vegetation where rice plants tolerant to ACC inhibitors are cultivated (for example, rice plants described in WO 2011/028832 that is incorporated by reference herein).

In paricular, the invention relates to method for controlling unwanted vegetation which comprises allowing a herbicidally active amount of at least one herbicidal composition according to the present invention to act on plants, their environment or on seed.

The invention is also relates to use of a herbicidal composition according the present invention an agrochemical composition according to the present invention for controlling unwanted vegetation, preferably where crop plants are cultivated, more preferably where graminaceous crop plants, such as barley, millet, corn, rice, wheat and sugar cane, are cultivated, most preferably where rice plants are cultivated, more preferably where rice plants tolerant to ACC inhibitors are cultivated.

In particular, the invention relates to use of a herbicidal composition according the present invention an agrochemical composition according to the present invention for controlling unwanted vegetation where rice plants which are tolerant to ACC inhibitors are cultivated.

The invention also relates to a method for the desiccation or defoliation of plants.

As used herein, the terms "undesirable vegetation", "unwanted vegetation"and "harmful plants" are synonyms.

Solutions for seed treatment (LS), suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40% by weight, in the ready-to-use preparations. Application can be carried out before or during sowing.

Methods for applying compositions according to the present invention, respectively, on to plant propagation material, especially seeds include dressing, coating, pelleting, dusting, soaking and in-furrow application methods of the propagation material. Preferably, compound I or the compositions thereof, respectively, are applied on to the plant propagation material by a method such that germination is not induced, e. g. by seed dressing, pelleting, coating and dusting.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the agrochemical composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, either individual components of the agrochemical composition according to the invention or partially premixed components, e. g. agrochemical components comprising a herbicidal compound A and at least one herbicidal compound B and optionally safener C may be mixed by the user in a spray tank and further auxiliaries and additives may be added, if appropriate.

In a further embodiment, individual components of the agrochemical composition according to the invention such as parts of a kit or parts of a binary or ternary mixture may be mixed by the user himself in a spray tank and further auxiliaries may be added, if appropriate.

In a further embodiment, either individual components of the agrochemical composition according to the invention or partially premixed components, e. g. components comprising a herbicidal compound A and at least one herbicidal compound B and optionally safener C, can be applied jointly (e.g. after tank mix) or consecutively.

The herbicidal compound A and the at least one herbicidal compound B and optionally safener C can be formulated and applied jointly or separately, simultaneously or in succession, before, during or after the emergence of the plants. In case of separate application, the order of the application of the active compounds A, B and/or C is of minor importance. The only thing that is important is that the a herbicidal compound A and the at least one herbicidal compound B and optionally safener C are present simultaneously at the site of action, i.e. are at the same time in contact with or taken up by the plant to be controlled or safened.

The compositions according to the invention control vegetation on non-crop areas very efficiently, especially at high rates of application. They act against broad-leafed weeds and grass weeds in crops such as wheat, rice, corn, soybeans and cotton without causing any significant damage to the crop plants. This effect is mainly observed at low rates of application.

The compositions according to the invention are applied to the plants mainly by spraying the leaves. Here, the application can be carried out using, for example, water as carrier by customary spraying techniques using spray liquor amounts of from about 100 to 1000 l/ha (for example from 300 to 400 l/ha). The herbicidal compositions may also be applied by the low-volume or the ultra-low-volume method, or in the form of microgranules.

Application of the herbicidal compositions according to the present invention can be done before, during and/or after, preferably during and/or after, the emergence of the undesirable plants.

The herbicidal compositions according to the present invention can be applied pre- or post-emergence or together with the seed of a crop plant. It is also possible to apply the compounds and compositions by applying seed, pretreated with a composition of the invention, of a crop plant. If the active compounds A and B and, if appropriate C, are less well tolerated by certain crop plants, application techniques may be used in which the herbicidal compositions are sprayed, with the aid of the spraying equipment, in such a way that as far as possible they do not come into contact with the leaves of the sensitive crop plants, while the active compounds reach the leaves of undesirable plants growing underneath, or the bare soil surface (post-directed, lay-by).

In a further embodiment, the composition according to the invention can be applied by treating seed. The treatment of seed comprises essentially all procedures familiar to the person skilled in the art (seed dressing, seed coating, seed dusting, seed soaking, seed film coating, seed multilayer coating, seed encrusting, seed dripping and seed pelleting). Here, the herbicidal compositions can be applied diluted or undiluted.

The term "seed" comprises seed of all types, such as, for example, corns, seeds, fruits, tubers, seedlings and similar forms. Here, preferably, the term seed describes corns and seeds. The seed used can be seed of the useful plants mentioned above, but also the seed of transgenic plants or plants obtained by customary breeding methods.

Moreover, it may be advantageous to apply the compositions of the present invention on their own or jointly in combination with other crop protection agents, for example with agents for controlling pests or phytopathogenic fungi or bacteria or with groups of active compounds which regulate growth. Also of interest is the miscibility with mineral salt solutions which are employed for treating nutritional and trace element deficiencies. Non-phytotoxic oils and oil concentrates can also be added.

When employed in plant protection, the amounts of the herbicidal compound A and at least one herbicidal compound B and, if appropriate, safeners C without formulation auxiliaries, are, depending on the kind of effect desired, from 0.001 to 2 kg per ha, preferably from 0.005 to 2 kg per ha, more preferably from 0.05 to 0.9 kg per ha and in particular from 0.1 to 0.75 kg per ha.

In another embodiment of the invention, the application rate of the herbicidal compound A and at least one herbicidal compound B and, if appropriate, safener C, is from 0.001 to 3 kg/ha, preferably from 0.005 to 2.5 kg/ha and in particular from 0.01 to 2 kg/ha of active substance (a.s.).

In another preferred embodiment of the invention, the amounts of the herbicidal compound A and at least one herbicidal compound B and, if appropriate, safeners C without formulation auxiliaries are from 0.1 g/ha to 3000 g/ha, preferably 10 g/ha to 1000 g/ha, depending on the control target, the season, the target plants and the growth stage.

In another preferred embodiment of the invention, the application rates of the herbicidal compound A are in the range from 0.1 g/ha to 5000 g/ha and preferably in the range from 1 g/ha to 2500 g/ha or from 5 g/ha to 2000 g/ha.

In another preferred embodiment of the invention, the application rate of the herbicidal compound A is 0.1 g/ha to 1000 g/ha, preferably 1 g/ha to 750 g/ha, more preferably 5 g/ha to 500 g/ha.

The required application rates of the at least one herbicidal compound B are generally in the range of from 0.0005 kg/ha to 2.5 kg/ha and preferably in the range of from 0.005 kg/ha to 2 kg/ha or 0.01 kg/ha to 1.5 kg/h of a.s.

The required application rates of safeners C are generally in the range of from 0.0005 kg/ha to 2.5 kg/ha and preferably in the range of from 0.005 kg/ha to 2 kg/ha or 0.01 kg/ha to 1.5 kg/ha of a.s.

In treatment of plant propagation materials such as seeds, e. g. by dusting, coating or drenching seed, total amounts of active substances of from 0.1 to 1000 g, preferably from 1 to 1000 g, more preferably from 1 to 100 g and most preferably from 5 to 100 g, per 100 kilogram of plant propagation material (preferably seeds) are generally required.

In another embodiment of the invention, to treat the seed, the amounts of active substances applied, i.e. a herbicidal compound A and at least one herbicidal compound B and, if appropriate, safener C are generally employed in amounts of from 0.001 to 10 kg per 100 kg of seed.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

In the methods of the present invention it is immaterial whether the at least one herbicidal compound A and the at least one herbicidal compound B and optionally the safener C are formulated and applied jointly or separately.

In the case of separate application it is of minor importance, in which order the application takes place. It is only necessary, that the at least one herbicidal compound A and the at least one herbicidal compound B and optionally safener C are applied in a time frame that allows simultaneous action of the active ingredients on the plants, preferably within a time-frame of at most 14 days, in particular at most 7 days.

Depending on the application method in question, the compositions according to the invention can additionally be employed in a further number of crop plants for eliminating undesirable plants. Examples of suitable crops are the following:

Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and prunus domestica, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera, Zea mays.

Preferred crops are Arachis hypogaea, Beta vulgaris spec. altissima, Brassica napus var. napus, Brassica oleracea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatissimum, Lycopersicon lycopersicum, Malus spec., Medicago sativa, Nicotiana tabacum (N.rustica), Olea europaea, Oryza sativa , Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays

Especially preferred crops are crops of rice, wheat and barley. Most preferred crop is rice, particularly preferred is rice tolerant to ACC inhibitors (for example, rice plants described in WO 2011/028832 that is incorporated by reference herein).

The compositions according to the invention can also be used in genetically modified plants. The term "genetically modified plants" is to be understood as plants whose genetic material has been modified by the use of recombinant DNA techniques to include an inserted sequence of DNA that is not native to that plant species' genome or to exhibit a deletion of DNA that was native to that species' genome, wherein the modification(s) cannot readily be obtained by cross breeding, mutagenesis or natural recombination alone. Often, a particular genetically modified plant will be one that has obtained its genetic modification(s) by inheritance through a natural breeding or propagation process from an ancestral plant whose genome was the one directly treated by use of a recombinant DNA technique. Typically, one or more genes have been integrated into the genetic material of a genetically modified plant in order to improve certain properties of the plant. Such genetic modifications also include but are not limited to targeted post-translational modification of protein(s), oligo- or polypeptides. e. g., by inclusion therein of amino acid mutation(s) that permit, decrease, or promote glycosylation or polymer additions such as prenylation, acetylation farnesylation, or PEG moiety attachment.

Plants that have been modified by breeding, mutagenesis or genetic engineering, e.g. have been rendered tolerant to applications of specific classes of herbicides, such as auxinic herbicides such as dicamba or 2,4-D; bleacher herbicides such as 4-hydroxyphenylpyruvate dioxygenase (HPPD) inhibitors or phytoene desaturase (PDS) inhibitors; acetolactate synthase (ALS) inhibitors such as sulfonylureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase inhibitors; lipid biosynthesis inhibitors such as acetylCoA carboxylase (ACCase) inhibitors; or oxynil (i. e. bromoxynil or ioxynil) herbicides as a result of conventional methods of breeding or genetic engineering; furthermore, plants have been made resistant to multiple classes of herbicides through multiple genetic modifications, such as resistance to both glyphosate and glufosinate or to both glyphosate and a herbicide from another class such as ALS inhibitors, HPPD inhibitors, auxinic herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several cultivated plants have been rendered tolerant to herbicides by mutgenesis and conventional methods of breeding, e. g., Clearfield® summer rape (Canola, BASF SE, Germany) being tolerant to imidazolinones, e. g., imazamox, or ExpressSun® sunflowers (DuPont, USA) being tolerant to sulfonyl ureas, e. g., tribenuron. Genetic engineering methods have been used to render cultivated plants such as soybean, cotton, corn, beets and rape, tolerant to herbicides such as glyphosate, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany).

The compositions according to the invention can be used in herbicide-tolerant monocotyledonous plants of the grass family Poaceae. The family Poaceae may be divided into two major clades, the clade containing the subfamilies Bambusoideae, Ehrhartoideae, and Pooideae (the BEP clade) and the clade containing the subfamilies Panicoideae, Arundinoideae, Chloridoideae, Centothecoideae, Micrairoideae, Aristidoideae, and Danthonioideae (the PACCMAD clade). The subfamily Bambusoideae includes tribe Oryzeae. The compositions according to the invention can preferably be used plants of the BEP clade, in particular plants of the subfamilies Bambusoideae and Ehrhartoideae which are tolerant to at least one herbicide that inhibits acetyl-Coenzyme A carboxylase activity as a result of expressing an acetyl-Coenzyme A carboxylase enzyme. The BET clade includes subfamilies Bambusoideae, Ehrhartoideae, and group Triticodae and no other subfamily Pooideae groups. BET crop plants are plants grown for food or forage that are members of BET subclade, for example barley, corn, rice, etc.

The compositions according to the invention can be also used in commerially important herbicide-tolerant monocots, including Sugarcane (Saccharum spp.), as well as Turfgrasses, e.g., Poa pratensis (Bluegrass), Agrostis spp. (Bentgrass), Lolium spp. (Ryegrasses), Festuca spp. (Fescues), Zoysia spp. (Zoysia grass), Cynodon spp. (Bermudagrass), Stenotaphrum secundatum (St. Augustine grass), Paspalum spp. (Bahiagrass), Eremochloa ophiuroides (Centipedegrass), Axonopus spp. (Carpetgrass), Bouteloua dactyloides (Buffalograss), and Bouteloua var. spp. (Grama grass).

In one embodiment, the compositions according to the invention can be used in herbicide-tolerant plants of the Bambusoideae subfamily. Such plants are typically tolerant to one or more herbicides that inhibit acetyl-Coenzyme A carboxylase activity. Examples of herbicide-tolerant plants of the subfamily Bambusoideae include, but are not limited to, those of the genera Arundinaria, Bambusa, Chusquea, Guadua, and Shibataea.

In another embodiment, the compositions according to the invention can be used in herbicide-tolerant plants of the Ehrhartoideae subfamily. Such plants are typically tolerant to one or more herbicides that inhibit acetyl-Coenzyme A carboxylase activity. Examples of herbicide-tolerant plants of the subfamily Ehrhartoideae include, but are not limited to, those of the genera Erharta, Leersia, Microlaena, Oryza, and Zizania.

In another embodiment, the compositions according to the invention can be used in herbicide-tolerant plants of the Pooideae subfamily. Such plants are typically tolerant to one or more herbicides that inhibit acetyl-Coenzyme A carboxylase activity. Examples of herbicide-tolerant plants of the subfamily Ehrhartoideae include, but are not limited to, those of the genera Triticeae, Aveneae, and Poeae.

In another embodiment, the compositions according to the invention can be used in herbicide-tolerant rice plants. Two species of rice are most frequently cultivated, Oryza sativa and Oryza glaberrima. Numerous subspecies of Oryza sativa are commercially important including Oryza sativa subsp. indica, Oryza sativa subsp. japonica, Oryza sativa subsp. javanica, Oryza sativa subsp. glutinosa (glutinous rice), Oryza sativa Aromatica group (e.g., basmati), and Oryza sativa (Floating rice group).

In another embodiment, the compositions according to the invention can be used in herbicide-tolerant wheat plants. Two species of wheat are most frequently cultivated, Triticum Triticum aestivum, and Triticum turgidum. Numerous other species are commercially important including, but not limited to, Triticum timopheevii, Triticum monococcum, Triticum zhukovskyi and Triticum urartu and hybrids thereof. Examples of T. aestivum subspecies included within the present invention are aestivum (common wheat), compactum (club wheat), macha (macha wheat), vavilovi (vavilovi wheat), spelta and sphaecrococcum (shot wheat). Examples of T. turgidum subspecies are turgidum, carthlicum, dicoccon, durum, paleocolchicuna, polonicum, turanicum and dicoccoides. Examples of T. monococcum subspecies are monococcum (einkorn) and aegilopoides. In one embodiment of the present invention, the wheat plant is a member of the Triticum aestivum species, and more particularly, the CDC Teal cultivar.

In another embodiment, the compositions according to the invention can be used in herbicide-tolerant barley plants. Two species of barley are most frequently cultivated, Hordeum vulgare and Hordeum arizonicum. Numerous other species are commercially important including, but not limited, Hordeum bogdanii, Hordeum brachyantherum, Hordeum brevisubulatum, Hordeum bulbosum, Hordeum comosum, Hordeum depressum, Hordeum intercedens, Hordeum jubatum, Hordeum marinum, Hordeum marinum, Hordeum parodii, Hordeum pusillum, Hordeum secalinum, and Hordeum spontaneum.

In another embodiment, the compositions according to the invention can be used in herbicide-tolerant rye plants. Examples of these plants include, but are not limited to, Secale sylvestre, Secale strictum, Secale cereale, Secale vavilovii, Secale africanum, Secale ciliatoglume, Secale ancestrale, and Secale montanum.

In another embodiment, the compositions according to the invention can be used in herbicide-tolerant turf plants. Examples of species of Turf grass include Zoysia japonica, Agrostris palustris, Poa pratensis, Poa annua, Digitaria sanguinalis, Cyperus rotundus, Kyllinga brevifolia, Cyperus amuricus, Erigeron canadensis, Hydrocotyle sibthorpioides, Kummerowia striata, Euphorbia humifusa, and Viola arvensis.

In another embodiment, the compositions according to the invention can be used in plants being able to tolerate herbicides other then inhibiting acetyl-Coenzyme A carboxylase activity, but affecting other physiological processes. For example, the compositions according to the invention can be used in plants which are tolerant to acetyl-Coenzyme A carboxylase inhibitors and also tolerant to other herbicides, for example, enzyme inhibitors. Examples of other enzyme inhibitors include, but are not limited to, inhibitors of 5-enolpyruvylshikimate-3-phosphate synthase (EPSPS) such as glyphosate, inhibitors of acetohydroxyacid synthase (AHAS) such as imidazolinones, sulfonylureas and sulfonamide herbicides, and inhibitors of glutamine synthase such as glufosinate. In addition to enzyme inhibitors, plants may also be tolerant of herbicides having other modes of action, for example, auxinic herbicides such as 2,4-D or dicamba, chlorophyll/carotenoid pigment inhibitors such as hydroxyphenylpyruvate dioxygenase (HPPD) inhibitors or phytoene desaturase (PDS) inhibitors, protoporphyrinogen-IX oxidase inhibitors, cell membrane destroyers, photosynthetic inhibitors such as bromoxynil or ioxynil, cell division inhibitors, root inhibitors, shoot inhibitors, and combinations thereof.

In another embodiment, the compositions according to the invention can be used in plants tolerant to acetyl-Coenzyme A carboxylase inhibitors, which relative to a wild-type plant, comprise an increased amount of, or an improved profile of, a compound selected from the group consisting of: glucosinolates (e.g., glucoraphanin (4-methylsulfinylbutyl-glucosinolate), sulforaphane, 3-indolylmethyl-glucosinolate (glucobrassicin), 1-methoxy-3-indolylmethyl-glucosinolate (neoglucobrassicin)); phenolics (e.g., flavonoids (e.g., quercetin, kaempferol), hydroxycinnamoyl derivatives (e.g., 1,2,2'-trisinapoylgentiobiose, 1,2-diferuloylgentiobiose, 1,2'-disinapoyl-2-feruloylgentiobiose, 3-O-caffeoyl-quinic (neochlorogenic acid)); and vitamins and minerals (e.g., vitamin C, vitamin E, carotene, folic acid, niacin, riboflavin, thiamine, calcium, iron, magnesium, potassium, selenium, and zinc).

In another embodiment, the compositions according to the invention can be used in plants tolerant to acetyl-Coenzyme A carboxylase inhibitors, which relative to a wild-type plant, comprise an increased amount of, or an improved profile of, a compound selected from the group consisting of: progoitrin; isothiocyanates; indoles (products of glucosinolate hydrolysis); glutathione; carotenoids such as beta-carotene, lycopene, and the xanthophyll carotenoids such as lutein and zeaxanthin; phenolics comprising the flavonoids such as the flavonols (e.g. quercetin, rutin), the flavans/tannins (such as the procyanidins comprising coumarin, proanthocyanidins, catechins, and anthocyanins); flavones; phytoestrogens such as coumestans, lignans, resveratrol, isoflavones e.g., genistein, daidzein, and glycitein; resorcyclic acid lactones; organosulphur compounds; phytosterols; terpenoids such as carnosol, rosmarinic acid, glycyrrhizin and saponins; chlorophyll; chlorphyllin, sugars, anthocyanins, and vanilla.

In another embodiment, the compositions according to the invention can be used in plants tolerant to acetyl-Coenzyme A carboxylase inhibitors, which relative to a wild-type plant, comprise an increased amount of, or an improved profile of, a compound selected from the group consisting of: vincristine, vinblastine, taxanes (e.g., taxol (paclitaxel), baccatin III, 10-desacetylbaccatin III, 10-desacetyl taxol, xylosyl taxol, 7-epitaxol, 7-epibaccatin III, 10-desacetylcephalomannine, 7-epicephalomannine, taxotere, cephalomannine, xylosyl cephalomannine, taxagifine, 8-benxoyloxy taxagifine, 9-acetyloxy taxusin, 9-hydroxy taxusin, taiwanxam, taxane Ia, taxane Ib, taxane Ic, taxane Id, GMP paclitaxel, 9-dihydro 13-acetylbaccatin III, 10-desacetyl-7-epitaxol, tetrahydrocannabinol (THC), cannabidiol (CBD), genistein, diadzein, codeine, morphine, quinine, shikonin, ajmalacine, serpentine, and the like.

Furthermore, plants are also covered that are by the use of recombinant DNA techniques capable to synthesize one or more insecticidal proteins, especially those known from the bacterial genus Bacillus, particularly from Bacillus thuringiensis, such as delta-endotoxins, e. g., CryIA(b), CryIA(c), CryIF, CryIF(a2), CryIIA(b), CryIIIA, CryIIIB(b1) or Cry9c; vegetative insecticidal proteins (VIP), e. g., VIP1, VIP2, VIP3 or VIP3A; insecticidal proteins of bacteria colonizing nematodes, e. g., Photorhabdus spp. or Xenorhabdus spp.; toxins produced by animals, such as scorpion toxins, arachnid toxins, wasp toxins, or other insect-specific neurotoxins; toxins produced by fungi, such as Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilbene synthase, bibenzyl synthase, chitinases or glucanases. In the context of the present invention these insecticidal proteins or toxins are to be understood expressly also as including pre-toxins, hybrid proteins, truncated or otherwise modified proteins. Hybrid proteins are characterized by a new combination of protein domains, (see, e. g., WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g., in the publications mentioned above. These insecticidal proteins contained in the genetically modified plants impart to the plants producing these proteins tolerance to harmful pests from all taxonomic groups of arthropods, especially to beetles (Coleoptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g., Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e.g., EP-A 392 225), plant disease resistance genes (e. g., potato culti-vars, which express resistance genes acting against Phytophthora infestans derived from the Mexican wild potato, Solanum bulbocastanum) or T4-lyso-zym (e.g., potato cultivars capable of synthesizing these proteins with increased resistance against bacteria such as Erwinia amylovora). The methods for producing such genetically modified plants are generally known to the person skilled in the art and are described, e.g., in the publications mentioned above.

Furthermore, plants are also covered that are by the use of recombinant DNA techniques capable to synthesize one or more proteins to increase the productivity (e.g., bio-mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of ingredients or new ingredients, specifically to improve human or animal nutrition, e. g., oil crops that produce health-promoting long-chain omega-3 fatty acids or unsaturated omega-9 fatty acids (e. g., Nexera® rape, Dow AgroSciences, Canada).

Furthermore, plants are also covered that contain by the use of recombinant DNA techniques a modified amount of ingredients or new ingredients, specifically to improve raw material production, e.g., potatoes that produce increased amounts of amylopectin (e.g. Amflora® potato, BASF SE, Germany).

Furthermore, it has been found that the the compositions according to the invention are also suitable for the defoliation and/or desiccation of plant parts, for which crop plants such as cotton, potato, oilseed rape, sunflower, soybean or field beans, in particular cotton, are suitable. In this regard compositions have been found for the desiccation and/or defoliation of plants, processes for preparing these compositions, and methods for desiccating and/or defoliating plants using the compositions according to the invention.

Additionally, the compositions according to the invention are suitable in particular for desiccating the above-ground parts of crop plants such as potato, oilseed rape, sunflower and soybean, but also cereals. This makes possible the fully mechanical harvesting of these important crop plants.

Also of economic interest is the facilitation of harvesting, which is made possible by concentrating within a certain period of time the dehiscence, or reduction of adhesion to the tree, in citrus fruit, olives and other species and varieties of pomaceous fruit, stone fruit and nuts. The same mechanism, i.e. the promotion of the development of abscission tissue between fruit part or leaf part and shoot part of the plants is also essential for the controlled defoliation of useful plants, in particular cotton.

Moreover, a shortening of the time interval in which the individual cotton plants mature leads to an increased fiber quality after harvesting.

The following examples serve to illustrate the invention.

In the examples below, using the method of S. R. Colby (1967) "Calculating synergistic and antagonistic responses of herbicide combinations", Weeds 15, p. 22ff., the value E, which is expected if the activity of the individual active compounds is only additive, was calculated.

$$E = X + Y - (X \cdot Y / 100)$$

where

X = percent activity using active compound A at an application rate a;
Y = percent activity using active compound B at an application rate b;
E = expected activity (in %) by A + B at application rates a + b.

For the ternary compositions:

$$E = X + Y + Z - \frac{X \cdot Y + X \cdot Z + Y \cdot Z}{100} + \frac{X \cdot Y \cdot Z}{10000}$$

where

X = percent activity using active compound A at an application rate a;
Y = percent activity using active compound B at an application rate b;
Z = percent activity using active compound D at an application rate d;
E = expected activity (in %) by A + B + D at application rates a + b + d.

If the value found experimentally is higher than the value E calculated according to Colby, a synergistic effect is present.

**Examples**

The herbicidal action of the compositions according to the invention was demonstrated by the following greenhouse experiments:

The culture containers used were plastic pots containing loamy sand with approximately 2-3.0% of organic matter. The seeds of the test plants were sown separately for each species.

For the pre-emergence treatment, the active compounds, suspended or emulsified in water, were applied directly after sowing by means of finely distributing nozzles. The containers were irrigated gently to promote germination and growth and subsequently covered with transparent plastic hoods until the plants had rooted. This cover caused uniform germination of the test plants unless this was adversely affected by the active compounds.

For the post-emergence treatment, the test plants were grown to a plant height of from 3 to 15 cm, depending on the plant habit, and only then treated with the active compounds which had been suspended or emulsified in water. To this end, the test plants were either sown directly, and grown in the same containers, or they were first grown separately as seedlings and transplanted into the test containers a few days prior to treatment.

Depending on the species, the plants were kept at 10 - 25°C and 20 - 35°C, respectively. The test period extended over 1 to 4 weeks. During this time, the plants were tended and their response to the individual treatments was evaluated.

Evaluation was carried out using a scale from 0 to 100. 100 means no emergence of the plants, or complete destruction of at least the above-ground parts, and 0 means no damage or normal course of growth.

The plants used in the greenhouse experiments were of the following species:

| Bayer code | Scientific name |
|---|---|
| AMARE | *Amaranthus retroflexus L.* |
| BRADE | *Brachiaria deflexa* |
| COMBE | *Commelina benghalensis* |
| IPOHE | *Ipomoea hederacea* |
| LEFFA | *Leptochloa fusca subsp. Fascicularis* |
| PHACA | *Phalaris canariensis L.* |
| SEBEX | *Sesbania exaltata* |
| SETVI | *Setaria viridis L.* |

The results of these tests are given below in the use examples and demonstrate the synergistic effect of the mixtures according to the present invention.

Example 1: Post-emergence treatment by the mixture of cycloxydim (a1.19) + azimsulfuron (b2.1).

| application rate a.i. in g/ha | | herbicidal activity against | |
|---|---|---|---|
| | | COMBE | |
| a1.19 | b2.1 | found | calculated |
| 10 | -- | 0 | -- |
| -- | 5 | 0 | -- |
| 10 | 5 | 55 | 0 |
| | | IPOHE | |
| 10 | -- | 10 | -- |

(continued)

|  |  | IPOHE |  |
|---|---|---|---|
| -- | 10 | 90 | -- |
| 10 | 10 | 98 | 91 |

Example 2: Post-emergence treatment by the mixture of cycloxydim (a1.19) + bensulfuron (b2.2).

| application rate a.i. in g/ha | | herbicidal activity against | | | |
|---|---|---|---|---|---|
| | | BRADE | | AMARE | |
| a1.19 | b2.2 | found | calculated | found | calculated |
| 10 | -- | 65 | -- | 0 | -- |
| -- | 31 | 0 | -- | 80 | -- |
| 10 | 31 | 70 | 65 | 90 | 80 |

Example 3 (not according to the invention): Post-emergence treatment by the mixture of quizalofop-p-ethyl (a1.14) + penoxsulam (b2.12).

| application rate a.i. in g/ha | | herbicidal activity against | |
|---|---|---|---|
| | | IPOHE | |
| a1.14 | b2.12 | found | calculated |
| 12 | -- | 0 | -- |
| -- | 8 | 80 | -- |
| 12 | 8 | 98 | 80 |

Example 4: Post-emergence treatment by the mixture of cycloxydim (a1.19) + penoxsulam (b2.12).

| application rate a.i. in g/ha | | herbicidal activity against | | | |
|---|---|---|---|---|---|
| | | IPOHE | | LEFFA | |
| a1.19 | b2.12 | found | calculated | found | calculated |
| 5 | -- | 0 | -- | 50 | -- |
| -- | 8 | 80 | -- | 0 | -- |
| 5 | 8 | 90 | 80 | 60 | 50 |

Example 5 (not according to the invention): Post-emergence treatment by the mixture of quizalofop-p-ethyl (a1.14) + bispyribac sodium (b2.13).

| application rate a.i. in g/ha | | herbicidal activity against | |
|---|---|---|---|
| | | IPOHE | |
| a1.14 | b2.13 | found | calculated |
| 12 | -- | 5 | -- |
| -- | 5 | 75 | -- |
| 12 | 5 | 90 | 76 |

Example 6: Post-emergence treatment by the mixture of cycloxydim (a1.19) + bispyribac sodium (b2.13).

| application rate a.i. in g/ha | | herbicidal activity against | | | |
|---|---|---|---|---|---|
| | | IPOHE | | AMARE | |
| a1.19 | b2.13 | found | calculated | found | calculated |
| 10 | -- | 10 | -- | 0 | -- |
| -- | 5 | 75 | -- | 90 | -- |
| 10 | 5 | 90 | 78 | 95 | 90 |

Example 7 (not according to the invention): Post-emergence treatment by the mixture of quizalofop-p-ethyl (a1.14) + clomazone (b5.1).

| application rate a.i. in g/ha | | herbicidal activity against | | | |
|---|---|---|---|---|---|
| | | COMBE | | SETVI | |
| a1.14 | b5.1 | found | calculated | found | calculated |
| 15 | -- | 0 | -- | 85 | -- |
| -- | 75 | 70 | -- | 15 | -- |
| 15 | 75 | 95 | 70 | 95 | 87 |

Example 8 (not according to the invention): Post-emergence treatment by the mixture of quizalofop-p-ethyl (a1.14) + quinclorac (b7.5).

| application rate a.i. in g/ha | | herbicidal activity against | |
|---|---|---|---|
| | | SETVI | |
| a1.14 | b7.5 | found | calculated |
| 7.5 | -- | 75 | -- |
| -- | 90 | 65 | -- |
| 7.5 | 90 | 95 | 91 |
| | | AMARE | |
| 7.5 | -- | 20 | -- |
| -- | 180 | 50 | -- |

(continued)

|  |  | AMARE | |
|---|---|---|---|
| 7.5 | 180 | 70 | 60 |

Example 9 (not according to the invention): Post-emergence treatment by the mixture of quizalofop-p-ethyl (a1.14) + triclopyr (b7.6).

| application rate a.i. in g/ha | | herbicidal activity against | | | | | |
|---|---|---|---|---|---|---|---|
| | | PHACA | | LEFFA | | SEBEX | |
| a1.14 | b7.6 | found | calculated | found | calculated | found | calculated |
| 15 | -- | 65 | -- | 65 | -- | 0 | -- |
| -- | 50 | 0 | -- | 20 | -- | 50 | -- |
| 15 | 50 | 90 | 65 | 85 | 72 | 100 | 50 |

Example 10 (not according to the invention): Post-emergence treatment by the mixture of quizalofop-p-ethyl (a1.14) + bispyribac sodium (b2.13) + dicamba (b7.2).

| application rate a.i. in g/ha | | | herbicidal activity against | |
|---|---|---|---|---|
| | | | LEFFA | |
| a1.14 | b2.13 | b7.2 | found | calculated |
| 10 | -- | -- | 40 | -- |
| -- | 5 | -- | 65 | -- |
| -- | -- | 250 | 25 | -- |
| 1 | 5 | 250 | 95 | 84 |

Example 11 (not according to the invention): Post-emergence treatment by the mixture of quizalofop-p-ethyl (a1.14) + bispyribac sodium (b2.13) + saflufenacil (b4.3).

| application rate a.i. in g/ha | | | herbicidal activity against | |
|---|---|---|---|---|
| | | | LEFFA | |
| a1.14 | b2.13 | b4.3 | found | calculated |
| 10 | -- | -- | 40 | -- |
| -- | 5 | -- | 65 | -- |
| -- | -- | 2.5 | 65 | -- |
| 10 | 5 | 2.5 | 95 | 93 |

Example 12 (not according to the invention): Post-emergence treatment by the mixture of quizalofop-p-ethyl (a1.14) + quinclorac (b7.5) + saflufenacil (b4.3).

| application rate a.i. in g/ha | | | herbicidal activity against | |
|---|---|---|---|---|
| | | | LEFFA | |
| a1.14 | b7.5 | b4.3 | found | calculated |
| 10 | -- | -- | 40 | -- |
| -- | 75 | -- | 65 | -- |
| -- | -- | 2.5 | 65 | -- |
| 10 | 75 | 2.5 | 98 | 93 |

Example 13 (not according to the invention): Post-emergence treatment by the mixture of quizalofop-p-ethyl (a1.14) + quinclorac (b7.5) + bentazone (b3.1).

| applicationrate ai in g/ha | | | herbicidal activity against | |
|---|---|---|---|---|
| | | | COMBE | |
| a1.14 | b7.5 | b3.1 | found | calculated |
| 10 | -- | -- | 0 | -- |
| -- | 7.5 | -- | 0 | -- |
| -- | -- | 250 | 95 | -- |
| 10 | 7.5 | 250 | 100 | 95 |
| | | | LEFFA | |
| 10 | -- | -- | 40 | -- |
| -- | 75 | -- | 65 | -- |
| -- | -- | 250 | 10 | -- |
| 10 | 75 | 250 | 85 | 81 |

## Claims

1. A herbicidal composition comprising:

   A) at least one herbicidal compound A from the class of ACC inhibitors which is cycloxydim (a1.19) including agriculturally acceptable salts thereof; and
   B) at least one herbicidal compound B selected from penoxsulam (b2.12) and bispyribac (b2.13); including agriculturally acceptable salts and ester, thioester and/or amide thereof; or a herbicidal composition, comprising cycloxydim (a1.19) and one further herbicidal compound B as the only active ingredients, wherein the herbicidal compound B is selected from azimsulfuron (b2.1) and bensulfuron (b2.2) including agriculturally acceptable salts, ester, thioester and/or amide thereof.

2. The composition as claimed in claim 1, consisting of cycloxydim (a1.19) and one further herbicidal compound B as active ingredients.

3. The composition as claimed in claim 1, comprising two herbicidal compounds B penoxsulam (b2.12) and bispyribac (b2.13).

4. The composition as claimed in any of one claims 1 to 3, additionally comprising at least one safener C.

5. An agrochemical composition comprising a herbicidally active amount of a composition according to any one of claims 1 to 3, at least one inert liquid and/or solid carrier and, if appropriate, at least one surface-active substance, provided that if the composition comprizes cycloxydim (a1.19) and azimsulfuron (b2.1) or cycloxydim (a1.19) and bensulfuron (b2.2) these are the only active ingredients of the composition.

6. A process for the preparation of the agrochemical composition according to claim 5, which comprises mixing a herbicidally active amount of at least one herbicidal compound A and at least one herbicidal compound B according to any one of claims 1 to 4 and optionally a safener C with at least one inert liquid and/or solid carrier and, if appropriate, at least one surface-active substance.

7. A method for controlling unwanted vegetation, which comprises allowing a herbicidally active amount of a herbicidal composition according to any one of claims 1 to 4 or an agrochemical composition according to claim 5 to act on plants, their environment or on seed.

8. The method as claimed in claim 7, wherein unwanted vegetation is controlled in vicinity of a rice plant.

9. The method as claimed in claim 8, wherein the rice plant is tolerant to ACC inhibitors.

10. Use of a herbicidal composition according to any one of claims 1 to 4 or an agrochemical composition according to claim 5 for controlling unwanted vegetation.

11. Use as claimed in claim 10, wherein the unwanted vegetation is controlled in vicinity of a rice plant which is tolerant to ACC inhibitors.

**Patentansprüche**

1. Herbizide Zusammensetzung, umfassend:

   A) mindestens eine herbizide Verbindung A aus der Klasse der ACC-Inhibitoren, bei der es sich um Cycloxydim (a1.19) handelt,
   einschließlich landwirtschaftlich unbedenklicher Salze davon,
   und
   B) mindestens eine herbizide Verbindung B ausgewählt aus Penoxsulam (b2.12) und Bispyribac (b2.13),
   einschließlich landwirtschaftlich unbedenklicher Salze und Ester, Thioester und/oder Amide davon,
   oder herbizide Zusammensetzung, umfassend Cycloxydim (a1.19) und eine weitere herbizide Verbindung B als alleinige Wirkstoffe, wobei die herbizide Verbindung B aus Azimsulfuron (b2.1) und Bensulfuron (b2.2) einschließlich landwirtschaftlich unbedenklicher Salze, Ester, Thioester und/oder Amide davon ausgewählt ist.

2. Zusammensetzung nach Anspruch 1, bestehend aus Cycloxydim (a1.19) und einer weiteren herbiziden Verbindung B als Wirkstoffen.

3. Zusammensetzung nach Anspruch 1, umfassend zwei herbizide Verbindungen B Penoxsulam (b2.12) und Bispyribac (b2.13).

4. Zusammensetzung nach einem der Ansprüche 1 bis 3, zusätzlich umfassend mindestens einen Safener C.

5. Agrochemische Zusammensetzung, umfassend eine herbizid wirksame Menge einer Zusammensetzung nach einem der Ansprüche 1 bis 3, mindestens einen inerten flüssigen und/oder festen Träger und gegebenenfalls mindestens ein Tensid, mit der Maßgabe, dass, wenn die Zusammensetzung Cycloxydim (a1.19) und Azimsulfuron (b2.1) oder Cycloxydim (a1.19) und Bensulfuron (b2.2) umfasst, diese die alleinigen Wirkstoffe der Zusammensetzung sind.

6. Verfahren zur Herstellung der agrochemischen Zusammensetzung nach Anspruch 5, welches das Mischen einer herbizid wirksamen Menge mindestens einer herbiziden Verbindung A und mindestens einer herbiziden Verbindung B nach einem der Ansprüche 1 bis 4 und gegebenenfalls eines Safeners C mit mindestens einem inerten flüssigen und/oder festen Träger und gegebenenfalls mindestens einem Tensid umfasst.

**7.** Verfahren zur Bekämpfung von unerwünschtem Pflanzenwuchs, bei dem man eine herbizid wirksame Menge einer herbiziden Zusammensetzung nach einem der Ansprüche 1 bis 4 oder einer agrochemischen Zusammensetzung nach Anspruch 5 auf Pflanzen, ihren Lebensraum oder auf Saatgut einwirken lässt.

**8.** Verfahren nach Anspruch 7, bei dem unerwünschter Pflanzenwuchs in der Nähe einer Reispflanze bekämpft wird.

**9.** Verfahren nach Anspruch 8, bei dem die Reispflanze gegenüber ACC-Inhibitoren tolerant ist.

**10.** Verwendung einer herbiziden Zusammensetzung nach einem der Ansprüche 1 bis 4 oder einer agrochemischen Zusammensetzung nach Anspruch 5 zur Bekämpfung von unerwünschtem Pflanzenwuchs.

**11.** Verwendung nach Anspruch 10, wobei der unerwünschte Pflanzenwuchs in der Nähe einer gegenüber ACC-Inhibitoren toleranten Reispflanze bekämpft wird.

## Revendications

**1.** Composition herbicide, comprenant :

A) au moins un composé herbicide A issu de la classe des inhibiteurs d'ACC, qui est le cycloxydime (a1.19) y compris les sels acceptables sur le plan agricole de celui-ci ;
et
B) au moins un composé herbicide B choisi parmi le pénoxsulam (b2.12) et le bispyribac (b2.13) ;
y compris les sels et esters, thioesters et/ou amides acceptables sur le plan agricole de ceux-ci ;
ou une composition herbicide, comprenant du cycloxydime (a1.19) et un autre composé herbicide B en tant que seuls ingrédients actifs, où le composé herbicide B est choisi parmi l'azimsulfuron (b2.1) et le bensulfuron (b2.2), y compris les sels et esters, thioesters et/ou amides acceptables sur le plan agricole de ceux-ci.

**2.** Composition selon la revendication 1, constituée par du cycloxydime (a1.19) et un autre composé herbicide B, comme ingrédients actifs.

**3.** Composition selon la revendication 1, comprenant deux composés herbicides B, le pénoxsulam (b2.12) et le bispyribac (b2.13).

**4.** Composition selon l'une quelconque des revendications 1 à 3, comprenant en outre au moins un phytoprotecteur C.

**5.** Composition agrochimique comprenant une quantité active sur le plan herbicide d'une composition selon l'une quelconque des revendications 1 à 3, au moins un véhicule inerte liquide et/ou solide, et, le cas échéant, au moins une substance tensioactive, à condition que si la composition comprend du cycloxydime (a1.19) et de l' azimsulfuron (b2.1) ou du cycloxydime (a1.19) et du bensulfuron (b2.2), ceux-ci soient les seuls ingrédients actifs de la composition.

**6.** Procédé de préparation de la composition agrochimique selon la revendication 5, comprenant le mélange d'une quantité active sur le plan herbicide d'au moins un composé herbicide A et d'au moins un composé herbicide B selon l'une quelconque des revendications 1 à 4, et éventuellement un phytoprotecteur C, avec au moins un véhicule inerte liquide et/ou solide, et, le cas échéant, au moins une substance tensioactive.

**7.** Méthode de contrôle de végétation indésirable, comprenant le fait de permettre à une quantité active sur le plan herbicide d'une composition herbicide selon l'une quelconque des revendications 1 à 4, ou d'une composition agrochimique selon la revendication 5, d'agir sur les plantes, leur environnement ou sur des semences.

**8.** Méthode selon la revendication 7, dans laquelle la végétation indésirable est contrôlée aux alentours d'une plante de riz.

**9.** Méthode selon la revendication 8, dans laquelle la plante de riz est tolérante vis-à-vis des inhibiteurs d'ACC.

**10.** Utilisation d'une composition herbicide selon l'une quelconque des revendications 1 à 4, ou d'une composition agrochimique selon la revendication 5, pour le contrôle de végétation indésirable.

**11.** Utilisation selon la revendication 10, dans laquelle la végétation indésirable est contrôlée aux alentours d'une plante de riz qui est tolérante vis-à-vis des inhibiteurs d'ACC.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1605760 A
- EP 2052605 A
- US 6908883 B
- WO 2004080171 A
- DD 298731
- EP 0614608 A
- WO 9965314 A
- WO 0003597 A
- EP 1382247 A
- WO 2008116730 A
- WO 2009115434 A
- WO 2011028832 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A

### Non-patent literature cited in the description

- **FARZIN ABDOLLAHI et al.** Effect of Separate and Combined Applications of Herbicides on Weed Control and Yield of Sugar Beet. *Weed Technology,* vol. 18 (04), 968-976
- *CHEMICAL ABSTRACTS,* 71526-07-3
- *CHEMICAL ABSTRACTS,* 52836-31-4
- *CHEMICAL ABSTRACTS,* 129531-12-0
- The Pesticide Manual. British Crop Protection Council, 2012
- *The Compendium of Pesticide Common Names, http://www.alanwood.net/pesticides*
- Farm Chemicals Handbook. Meister Publishing Company, 2000, vol. 86, 2000
- **B. HOCK ; C. FEDTKE ; R. R. SCHMIDT.** Herbizide [Herbicides. Georg Thieme Verlag, 1995
- **W. H. AHRENS.** Herbicide Handbook. Weed Science Society of America, 1994
- **K. K. HATZIOS.** Herbicide Handbook. Weed Science Society of America, 1998
- Catalogue of pesticide formulation types and international coding system. Technical Monograph. CropLife International, May 2008
- **MOLLET ; GRUBEMANN.** Formulation technology. Wiley VCH, 2001
- New developments in crop protection product formulation. **KNOWLES.** Agrow Reports DS243. T&F Informa, 2005
- International Ed. or North American Ed. **MCCUTCHEON'S.** Emulsifiers & Detergents, McCutcheon's Directories. 2008, vol. 1
- Adjuvants and additives. **KNOWLES.** Agrow Reports DS256. T&F Informa, 2006
- *Pest Management Science,* 2005, vol. 61, 246, , 258, , 277, , 269, , 286, , 326, , 332
- *Weed Science,* 2009, vol. 57, 108
- *Australian Journal of Agricultural Research,* 2007, vol. 58, 708
- *Science,* 2007, vol. 316, 1185
- **S. R. COLBY.** Calculating synergistic and antagonistic responses of herbicide combinations. *Weeds,* 1967, vol. 15, 22ff